# EUROPEAN PATENT SPECIFICATION

(11) **EP 4 082 820 B1**
(45) Date of publication and mention of the grant of the patent: **13.12.2023**
(21) Application number: 22170395.2
(22) Date of filing: 27.04.2022
(51) Int. Cl.: B60K 17/10, B60K 17/356, B60K 28/16

(54) **EARTH MOVING VEHICLE**
ERDBEWEGENDES FAHRZEUG
VÉHICULE DE TERASSEMENT

(30) Priority: 29.04.2021 IT 202100010862
(43) Date of publication of application: 02.11.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(56) References cited:
- WO-A1-2008/127528
- US-B2- 9 255 639
- US-B2- 9 440 656

## Description

### TECHNICAL FIELD

The present invention concerns a work vehicle and a related method control, in particular system and method for locking the differential of a work vehicle.

The present invention finds its preferred, although not exclusive, application in earth moving machine, such as a wheel loader.

### BACKGROUND OF THE INVENTION

Each moving vehicles are used primarily to move earth, i.e. to allow to dig, load, displace and/or transport earth from a location to another in a work place.

In particular, wheel loaders may be used for loading a quantity of earth and to move such loaded earth to its destination.

It is therefore clear that the loading operation is a crucial operation that needs stability of the vehicle. To this aim, it is known to lock the differential therefore improving the stability of the wheels on ground during the loading operation.

Such operation may be executed by the driver, e.g. pushing a button or actuating a leverage, that lock and unlock the differential according to the necessities.

However, since a wheel loader needs to rapidly lock and unlock the differential, it is known to provide automatic systems to recognize work conditions that needs to lock the differential, as disclosed, for sake of example, in WO2008127528 A1.

However, known automatic methods, such as the one disclosed in the aforementioned document, are not sufficiently precise to recognize a loading condition. Furthermore, known methods are not sufficiently quick to unlock the differential, when needed.

Therefore, the need is felt to provide method for locking and unlocking a differential of a work vehicle, in particular a wheel loader in a precise, quick and cost-effective manner.

An aim of the present invention is to satisfy the above mentioned needs in a cost-effective and optimized manner.

### SUMMARY OF THE INVENTION

The aforementioned aim is reached by a vehicle comprising a differential lock system and a related control method as claimed in the appended set of claims.

### BRIEF DESCRIPTION OF DRAWINGS

For a better understanding of the present invention, a preferred embodiment is described in the following, by way of a non-limiting example, with reference to the attached drawing wherein the only figure is a schematic representation of a vehicle comprising a locking system according to the invention.

### DETAILED DESCRIPTION OF THE INVENTION

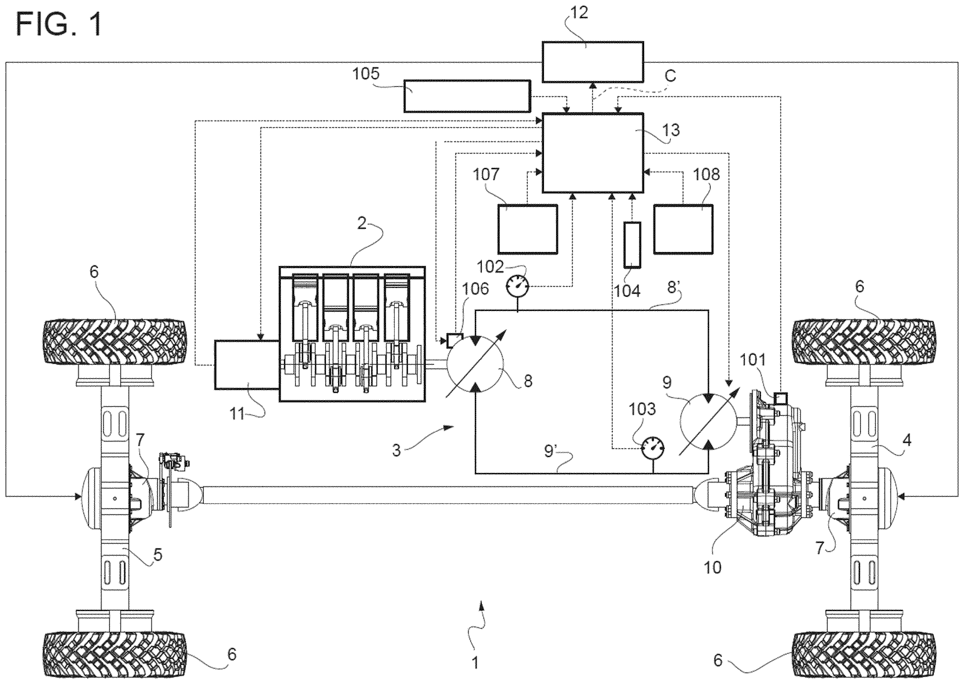

Figure 1 discloses a vehicle 1, not shown in its entirety for sake of clarity, e.g. a wheel loader, provided with a bucket and a boom operated by a dedicated circuit for moving earth, as known.

The vehicle 1, as known, comprises a torque source 2, e.g. an internal combustion engine, a hydrostatic transmission 3 and a pair of axles 4, 5, i.e. a rear axle 4 and a front axle 5, provided with respective wheels 6 configured to allow the movement of the vehicle on the ground.

The hydrostatic transmission 3, as known, is configured to receive an input torque from source 2 and to provide an output torque to axles 4, 5. In particular, between the hydrostatic transmission 3 and the axles 4, 5 it is operatively interposed a differential assembly 7, for each axle 4, 5 that is configured, as known, to divide the output torque coming to axles 4,5 between the wheels 6 according to their adherence on the ground.

More preferably, the hydrostatic transmission 3 comprises, as known, pump means 8 carried by an output shaft of the source 2 and a hydraulic motor 9 and a gearbox 10 that is carried by the hydraulic motor 9. The pump means 8 are fluidly connected by a first conduit 8', i.e. the "forward motion" high pressure conduit between output of pump means 8 and input of hydraulic motor 9 and by a second conduit 9', i.e. the "forward motion" low pressure conduit between an output of hydraulic motor 9 and input of pump means 8 Then, the gearbox 10 is operatively connected, as per se known, to axles 4, 5.

The torque source 2 is electrically controlled by an electronic control unit 11, ECU, comprising elaboration means configured to control and retrieved the speed/torque provided by source 2, i.e. the speed of the internal combustion engine. Accordingly, ECU 11 comprises a sensor configured to detect the speed/torque of torque source 2. Clearly, such sensor may be separated with respect to this latter.

Vehicle 1 further comprises differential lock means 12, e.g. a differential lock valve, configured to lock differential assemblies 7 according to an input.

Even if not shown, the vehicle 1 clearly comprises a bucket configured to load earth carried by a boom, as known in any wheel loader.

In particular, vehicle 1 comprises an electronic control unit 13, that may be integrated in ECU 11 or that may be a further electronic control unit configured to provide a control signal C to the differential lock means 12 to lock or unlock differential assemblies 7.

Advantageously, electronic control unit 13 comprises elaboration means electrically connected to a plurality of sensors means, as described hereunder and to ECU 11 (that is, as said, configured to detect the torque/source provided by torque source 2) to provide the control signal C to the differential lock means 12.

In particular, the plurality of sensors means comprises the following :
- A vehicle speed sensor 101, e.g. a speed sensor housed in gearbox 10, configured to detect vehicle speed;
- Pressure sensors 102, 103, respectively for said first and second conduits 8', 9', configured to detect the pressure therein;
- A travel direction switch sensor 104, e.g. a FNR switch, configured to retrieve that the displacement of the pump 8 is in forward position(positive displacement) or in rearward position(negative displacement) or in neutral position(displacement = 0);
- A hydraulic function switch sensor105, configured to retrieve the enabling of the hydraulic circuit controlling the bucket and the boom;
- A Pump displacement sensor 106, e.g. integrated into a solenoid valve controlling pump 8, and configured to detect the control signal value of the pump 8, e.g. a value of current provided by solenoid valve;
- A boom position sensor 107, configured to detect an inclination or a relative position (vertical or horizontal) of a point of the boom of the vehicle with respect to a fixed point on the vehicle 1;
- A bucket position sensor 108, configured to detect an inclination or a relative position (vertical or horizontal) of a point of the bucket of the vehicle with respect to a fixed point on the /boom or on the vehicle 1;

The electronic control unit 13 is, as said, configured to acquire the data from the above sensors means 101-108 and to provide control signal C that may assume a first value enabling the lock of the differential and a second value enabling the unlock of the differential, i.e. disabling the lock of the differential.

In particular, the elaboration means of electronic control unit 13 are configured to provide control signal C in its first value if the data retrieved by all the aforementioned sensors 101-108 each fulfills a preset condition in a preset time interval. The elaboration means are furthermore configured to set control signal C in its second value if at least one between data retrieved by the travel direction switch sensor 104 or data retrieved by vehicle speed sensor 101 fulfills a second condition.

In detail, the control signal C is set at its first value if elaboration means detects in a preset time interval (e.g., equal to about 3s) the following conditions:
i) Vehicle speed is below a lower threshold (e.g., lower with respect to 3Km/h);
ii) Pressure in first conduit is greater with respect to a specific threshold (e.g., greater than 250bar);
iii) Travel direction switch sensor detects forward motion;
iv) Hydraulic function is enabled;
v) Control signal of the pump is greater with respect to a specific threshold (greater than 600mA);
vi) Boom position below a preset position (for example, the relative distance of the boom with respect to the ground is lower than a boom threshold distance, e.g. equal to about 50cm);
vii) Bucket position within a preset position range (for example, the relative angle of the bucket with respect to the ground is comprised between a lower bucket threshold angle and an upper bucket threshold angle, e.g. equal to about +/-10°); and
viii) Engine speed higher with respect to a preset threshold (e.g., higher than 1500rpm);

In detail, the control signal C is set at its second value if elaboration means detects that at least one between the following features is reached:
ix) Travel direction switch sensor detects neutral or rearward motion selection; or
x) Vehicle speed is greater with respect to an upper threshold (greater than 10Km/h).

The operation of the above defined lock system is the following.

The electronic control unit 13 continuously controls the data retrieved by sensors means 101-108 to provide the status of control signal C. If for a preset time interval the conditions i)-viii) are met, then the control signal C is set at the first value. Then such status is maintained till at least one between conditions ix) or x) is met; accordingly, the status of control signal C is set to its second value.

In view of the above, the present invention further relates to a control method for locking or unlocking a differential of a work vehicle as described in the preceding:
- Retrieving data from torque source 2 and sensors means 101-108 of the vehicle;
- Elaborate such data for providing a control signal C for controlling said differential lock means, said control signal C being configured to assume a first value to lock said differentials 7 or a second value to unlock said differentials 7;
wherein said control signal C is set at its first value if in a preset time interval, the following conditions are met:
i) Vehicle speed is below a specific threshold;
ii) Pressure in first conduit is greater with respect to a lower threshold;
iii) Travel direction is in forward motion;
iv) Hydraulic function is enabled;
v) Control signal of the pump is greater with respect to a specific threshold;
vi) Boom position below a preset position;
vii) Bucket position within a preset position range; and
viii) Engine speed higher with respect to a preset threshold;
wherein said control signal C is set at its second value if at least one between the following features is reached:
i) Travel direction is in neutral or rearward motion; or
ii) Vehicle speed is greater with respect to an upper threshold.

In view of the foregoing, the advantages of the vehicle comprising a lock system and related control method according to the invention are apparent.

With respect to the known system and methods, the proposed system is configured to automatically detect in a clear way the loading condition of the work vehicle, in particular of the wheel loader. Accordingly, the efficiency and controllability of the vehicle is increased.

Indeed, with respect to the known system, the peculiar combination of selected parameters allows to provide a correct detection of the loading condition to allow locking of the differential.

Furthermore, the quick recognition of the neutral or rearward change of travel direction switch, easy detects the change to allow unlocking of the differential. Detection of speed of the vehicle greater with respect to a threshold guarantee the safety during the driving.

It is clear that modifications can be made to the described vehicle comprising a lock system and related control method which do not extend beyond the scope of protection defined by the claims.

For example, the mentioned sensors may be of any typology provided that allows to detect the claimed physical quantities.

Moreover, the gearbox, differential and hydrostatic transmission may be realized of any typology as known in the art, provided that they comprises the essential claimed elements.

## Claims

1. Earth moving vehicle (1) provided with a bucket carried by a boom to execute a work operation, said vehicle (1) comprising a torque source (2), a hydrostatic transmission (3) and a pair of axles (4, 5) provided with wheels (6), said wheels (6) being operatively connected to said hydrostatic transmission (3) via differential means (7) provided on each axle (4, 5),
said hydrostatic transmission (3) comprising a pump (8) carried by said torque source (2) and fluidly connected by a first and second conduits (8', 9') to a hydraulic motor (9) operatively connected to said axles (4, 5),
said vehicle (1) comprising differential lock means (12) configured to selectively lock or unlock said differentials (7), said differential lock means (12) being controlled by an electronic control unit (13) configured to provide a control signal (C), said control signal (C) assuming a first value configured to lock said differentials (7) and a second value configured to unlock said differentials (7),
said vehicle (1) comprising a plurality of sensors means (101-108) configured to detect physical quantities related to the operation of said vehicle, said electronic control unit (13) is configured to be electrically connected to said sensors means (101-108) to acquire their detected data and elaborate said control signal (C) accordingly,
said plurality of sensors means (101-108) comprising:
• A sensor (11) configured to detect the speed/torque provided by said torque source (2);
• a vehicle speed sensor (101) configured to detect vehicle speed;
• pressure sensors (102, 103) configured to detect the pressure in said two conduits (8', 9');
• a travel direction switch sensor (104) configured to retrieve the setting of the displacement of the said pump (8) in the forward, rearward or neutral position;
• a hydraulic function switch sensor (105) configured to retrieve the enabling of the hydraulic circuit controlling the bucket and the boom;
• a pump displacement sensor (106) configured to detect the control signal value of the displacement of said pump (8);
• a boom position sensor (107) configured to detect a position of the boom with respect to a fixed point of said vehicle; and
• a bucket position sensor (108), configured to detect a position of the bucket with respect to a fixed point on the boom of said vehicle.

2. Earth moving vehicle according to claim 1, wherein said vehicle speed sensor (101) is integrated into a gearbox (10) operatively interposed between said hydraulic motor (9) and said axles (4, 5).

3. Earth moving machine according to claims 1 or 2, wherein said control signal (C) is set at its first value if the following conditions are all met:
i) Vehicle speed is below a lower threshold;
ii) Pressure in first conduit is greater with respect to a specific threshold;
iii) Travel direction switch sensor detects forward motion;
iv) Hydraulic function is enabled;
v) Control signal of the pump is greater with respect to a specific threshold;
vi) Boom position below a preset position;
vii) Bucket position within a preset position range; and
viii) Engine speed higher with respect to a preset threshold.

4. Earth moving machine according to claim 3, wherein said control signal (C) is maintained in said first value until one between the following condition is met:
ix) Travel direction switch sensor detects neutral or rearward motion; or
x) Vehicle speed is greater with respect to an upper threshold then, the control signal (C) is set to its second value.

5. Earth moving machine according to claim 3, wherein:
• Vehicle speed lower threshold is 35 km/h;
• Pressure threshold is 250 bar;
• Control signal threshold is 600 mA; and
• Engine speed threshold is 1500 rpm.

6. Earth moving machine according to claim 4, wherein said vehicle speed upper threshold is 10 km/h.

7. Control method for locking or unlocking a differential (7) of a work vehicle (1) according to any of the preceding claims and comprising the following steps:
• Retrieving data from said sensors means (11, 101-108); and
• Elaborate such data for providing a control signal (C) for controlling said differential lock means, said control signal (C) being configured to assume a first value to lock said differentials (7) or a second value to unlock said differentials (7);
wherein said control signal (C) is set at its first value if in a preset time interval, the following conditions are met:
i) Vehicle speed is below a lower threshold;
ii) Pressure in first conduit is greater with respect to a specific threshold;
iii) Travel direction is in forward motion;
iv) Hydraulic function is enabled;
v) Control signal of the pump is greater with respect to a specific threshold;
vi) Boom position below a preset position;
vii) Bucket position within a preset position range; and
viii) Engine speed higher with respect to a preset threshold.
wherein said control signal (C) is set at its second value if at least one between the following features is reached:
i) Travel direction is neutral or reverse motion; or
ii) Vehicle speed is greater with respect to a specific threshold.

8. Method according to claim 7, wherein:
• Vehicle speed lower threshold is 35 km/h;
• Vehicle speed upper threshold is 10 km/h.
• Pressure threshold is 250 bar;
• Control signal threshold is 600 mA;
• Engine speed threshold is 1500 rpm.

## Patentansprüche

1. Erdbewegungsfahrzeug (1), das mit einer Schaufel ausgestattet ist, die von einem Ausleger getragen wird, um einen Arbeitsvorgang auszuführen, wobei das Fahrzeug (1) eine Drehmomentquelle (2), ein hydrostatisches Getriebe (3) und ein Paar von Achsen (4, 5) umfasst, das mit Rädern (6) versehen ist,
wobei die Räder (6) mit dem hydrostatischen Getriebe (3) über Differentialeinrichtungen (7) wirkend verbunden sind, die an der jeweiligen Achse (4, 5) vorgesehen sind,
wobei das hydrostatische Getriebe (3) eine Pumpe (8) umfasst, die von der Drehmomentquelle (2) getragen wird und über eine erste und zweite Leitung (8', 9') mit einem Hydraulikmotor (9) fluidisch verbunden ist, der mit den Achsen (4, 5) wirkend verbunden ist,
wobei das Fahrzeug (1) eine Differentialsperreinrichtung (12) umfasst, die dazu eingerichtet ist, die Differentiale (7) wahlweise zu sperren oder zu entsperren,
wobei die Differentialsperreinrichtung (12) von einer elektronischen Steuereinrichtung (13) gesteuert wird, die dazu eingerichtet ist, ein Steuersignal (C) bereitzustellen, wobei das Steuersignal (C) einen ersten Wert annimmt, der dazu eingerichtet ist, die Differentiale (7) zu sperren, und einen zweiten Wert annimmt, der dazu eingerichtet ist, die Differentiale (7) zu entsperren,
wobei das Fahrzeug (1) eine Mehrzahl von Sensoreinrichtungen (101 - 108) umfasst, die dazu eingerichtet sind, physikalische Größen zu erfassen, die mit dem Betrieb des Fahrzeugs in Verbindung stehen, wobei die elektronische Steuereinrichtung (13) dazu eingerichtet ist, mit den Sensoreinrichtungen (101 - 108) elektrisch verbunden zu sein, um deren erfasste Daten aufzunehmen und das Steuersignal entsprechend auszuarbeiten,
wobei die Mehrzahl von Sensoreinrichtungen (101 - 108) umfasst:
• einen Sensor (11), der dazu eingerichtet ist, die Drehzahl bzw. das Drehmoment zu erfassen, das von der Drehmomentquelle (2) bereitgestellt wird;
• einen Fahrzeuggeschwindigkeitssensor (101), der dazu eingerichtet ist, die Fahrzeuggeschwindigkeit zu erfassen;
• Drucksensoren (102, 103), die dazu eingerichtet sind, den Druck in den zwei Leitungen (8', 9') zu erfassen;
• einen Fahrtrichtungswechselsensor (104), der dazu eingerichtet ist, die Einstellung der Verschiebung der Pumpe (8) in der Vorwärts-, Rückwärts- oder Neutralposition abzurufen;
• einen hydraulischen Funktionswechselsensor (105), der dazu eingerichtet ist, die Freigabe des Hydraulikkreises abzurufen, der die Schaufel und den Ausleger steuert;
• einen Pumpenverschiebungssensor (106), der dazu eingerichtet ist, den Wert des Steuersignals der Verschiebung der Pumpe (8) zu erfassen;
• einen Auslegerpositionssensor (107), der dazu eingerichtet ist, eine Position des Auslegers bezüglich eines Fixpunktes des Fahrzeugs zu erfassen; und
• einen Schaufelpositionssensor (108), der dazu eingerichtet ist, eine Position der Schaufel bezüglich eines Fixpunktes auf dem Ausleger des Fahrzeugs zu erfassen.

2. Erdbewegungsfahrzeug nach Anspruch 1, wobei der Fahrzeuggeschwindigkeitssensor (101) in ein Getriebe (10) integriert ist, das zwischen dem Hydraulikmotor (9) und den Achsen (4, 5) wirkend angebracht ist.

3. Erdbewegungsmaschine nach Anspruch 1 oder 2, wobei das Steuersignal (C) auf den ersten Wert gesetzt wird, wenn die folgenden Bedingungen alle erfüllt sind:
i) Fahrzeuggeschwindigkeit ist geringer als ein unterer Grenzwert;
ii) Druck in der ersten Leitung ist größer als ein bestimmter Grenzwert;
iii) Fahrtrichtungswechselsensor erfasst eine Vorwärtsbewegung;
iv) hydraulische Funktion ist aktiviert;
v) Steuersignal der Pumpe ist größer als ein bestimmter Grenzwert;
vi) Auslegerposition ist unterhalb einer voreingestellten Position;
vii) Schaufelposition ist innerhalb eines voreingestellten Positionsbereichs; und
viii) die Motordrehzahl ist größer als ein voreingestellter Grenzwert.

4. Erdbewegungsmaschine nach Anspruch 3, wobei das Steuersignal (C) auf dem ersten Wert gehalten wird, bis eine der folgenden Bedingungen erfüllt ist:
ix) Fahrtrichtungswechselsensor erfasst Neutral oder eine Rückwärtsbewegung; oder
x) Fahrzeuggeschwindigkeit ist größer als ein oberer Grenzwert,
dann wird das Steuersignal (C) auf den zweiten Wert gesetzt.

5. Erdbewegungsmaschine nach Anspruch 3, wobei:
• der untere Fahrzeuggeschwindigkeitsgrenzwert 35km/h beträgt;
• der Druckgrenzwert 250 bar beträgt;
• der Steuersignalgrenzwert 600mA beträgt; und
• der Motordrehzahlgrenzwert 1500 U/min beträgt.

6. Erdbewegungsmaschine nach Anspruch 4, wobei der obere Fahrzeuggeschwindigkeitsgrenzwert 10 km/h beträgt.

7. Steuerungsverfahren zum Sperren oder Entsperren eines Differentials (7) eines Nutzfahrzeugs (1) nach einem der vorhergehenden Ansprüche und die folgenden Schritte umfassend:
• Abrufen von Daten von den Sensoreinrichtungen (11, 101 - 108); und
• Verarbeiten solcher Daten zum Bereitstellen eines Steuersignals (C) zum Steuern der Differentialsperreinrichtungen, wobei das Steuersignal (C) dazu eingerichtet ist, einen ersten Wert anzunehmen, um die Differentiale (7) zu sperren, oder einen zweiten Wert anzunehmen, um die Differentiale (7) zu entsperren;
wobei das Steuersignal (C) auf den ersten Wert gesetzt wird, wenn in einem voreingestellten Zeitintervall die folgenden Bedingungen erfüllt sind:
i) Fahrzeuggeschwindigkeit ist geringer als ein unterer Grenzwert;
ii) Druck in der ersten Leitung ist größer als ein bestimmter Grenzwert;
iii) Fahrtrichtung ist vorwärtsgerichtet;
iv) hydraulische Funktion ist aktiviert;
v) Steuersignal der Pumpe ist größer als ein bestimmter Grenzwert;
vi) Auslegerposition ist unterhalb einer voreingestellten Position;
vii) Schaufelposition ist innerhalb eines voreingestellten Positionsbereichs;
viii) Motordrehzahl ist größer als ein voreingestellter Grenzwert,
wobei das Steuersignal (C) auf den zweiten Wert gesetzt wird, wenn mindestens eines der folgenden Merkmale erreicht wird:
i) Fahrtrichtung ist neutral oder rückwärtsgerichtet; oder
ii) Fahrzeuggeschwindigkeit ist größer als ein bestimmter Grenzwert.

8. Verfahren nach Anspruch 7, wobei:
• der untere Fahrzeuggeschwindigkeitsgrenzwert 35 km/h beträgt;
• der obere Fahrzeuggeschwindigkeitsgrenzwert 10 km/h beträgt;
• der Druckgrenzwert 250 bar beträgt;
• der Grenzwert des Steuersignals 600 mA beträgt;
• der Motordrehzahlgrenzwert 1500 U/min beträgt.

## Revendications

1. Véhicule de terrassement (1) équipé d'un godet porté par une flèche pour exécuter une opération de travail, ledit véhicule (1) comprenant une source de couple (2), une transmission hydrostatique (3) et une paire d'essieux (4, 5) équipés de roues (6), lesdites roues (6) étant reliées de manière fonctionnelle à ladite transmission hydrostatique (3) via des moyens différentiels (7) prévus sur chaque essieu (4, 5),
ladite transmission hydrostatique (3) comprenant une pompe (8) portée par ladite source de couple (2) et reliée fluidiquement par un premier et un second conduits (8', 9') à un moteur hydraulique (9) fonctionnellement relié auxdits essieux (4, 5),
ledit véhicule (1) comprenant des moyens de blocage de différentiel (12) configurés pour bloquer ou débloquer sélectivement lesdits différentiels (7), lesdits moyens de blocage de différentiel (12) étant commandés par une unité de commande électronique (13) configurée pour fournir un signal de commande (C), ledit signal de commande (C) prenant une première valeur configurée pour bloquer lesdits différentiels (7) et une seconde valeur configurée pour débloquer lesdits différentiels (7),
ledit véhicule (1) comprenant une pluralité de moyens de détection (101-108) configurés pour détecter des quantités physiques liées au fonctionnement dudit véhicule, ladite unité de commande électronique (13) est configurée pour être connectée électriquement auxdits moyens de détection (101-108) afin d'acquérir leurs données détectées et d'élaborer ledit signal de commande (C) en conséquence,
ladite pluralité de moyens de détection (101-108) comprenant :
• un capteur (11) configuré pour détecter la vitesse/le couple fourni(e) par ladite source de couple (2) ;
• un capteur de vitesse du véhicule (101) configuré pour détecter la vitesse du véhicule ;
• des capteurs de pression (102, 103) configurés pour détecter la pression dans lesdits deux conduits (8', 9') ;
• un capteur de commutateur de sens de déplacement (104) configuré pour récupérer le réglage du déplacement de ladite pompe (8) en position avant, arrière ou neutre ;
• un capteur de commutateur de fonction hydraulique (105) configuré pour récupérer l'activation du circuit hydraulique commandant le godet et la flèche ;
• un capteur de déplacement de pompe (106) configuré pour détecter la valeur du signal de commande du déplacement de ladite pompe (8)
• un capteur de position de la flèche (107) configuré pour détecter une position de la flèche par rapport à un point fixe dudit véhicule ; et
• un capteur de position du godet (108), configuré pour détecter une position du godet par rapport à un point fixe sur la flèche dudit véhicule.

2. Véhicule de terrassement selon la revendication 1, dans lequel ledit capteur de vitesse du véhicule (101) est intégré dans une boîte de vitesses (10) interposée de manière fonctionnelle entre ledit moteur hydraulique (9) et lesdits essieux (4, 5).

3. Véhicule de terrassement selon les revendications 1 ou 2, dans lequel ledit signal de commande (C) est réglé sur sa première valeur si les conditions suivantes sont toutes remplies :
i) la vitesse du véhicule est inférieure à un seuil inférieur ;
ii) la pression dans le premier conduit est supérieure à un seuil spécifique ;
iii) le capteur de commutateur de sens de déplacement détecte les mouvements vers l'avant ;
iv) la fonction hydraulique est activée ;
v) le signal de commande de la pompe est supérieur à un seuil spécifique ;
vi) la position de la flèche est inférieure à une position prédéfinie ;
vii) la position du godet se trouve dans une plage de positions prédéfinie ; et
viii)la vitesse du moteur est supérieure à un seuil prédéfini.

4. Véhicule de terrassement selon la revendication 3, dans lequel ledit signal de commande (C) est maintenu dans ladite première valeur jusqu'à ce que l'une des conditions suivantes soit remplie :
ix) le capteur du commutateur de sens de déplacement détecte un mouvement neutre ou vers l'arrière ; ou
x) la vitesse du véhicule est supérieure à un seuil supérieur ;
le signal de commande (C) est alors réglé sur sa seconde valeur.

5. Véhicule de terrassement selon la revendication 3, dans lequel :
• le seuil inférieur de la vitesse du véhicule est de 35 km/h ;
• le seuil de pression est de 250 bars ;
• le seuil du signal de commande est de 600 mA ; et
• le seuil de vitesse du moteur est de 1500 rpm.

6. Véhicule de terrassement selon la revendication 4, dans lequel le seuil supérieur de la vitesse du véhicule est de 10 km/h.

7. Procédé de commande de blocage ou de déblocage d'un différentiel (7) d'un véhicule de travail (1) selon l'une quelconque des revendications précédentes et comprenant les étapes suivantes :
• récupérer les données desdits moyens de détection (11, 101-108) ; et
• élaborer ces données pour fournir un signal de commande (C) pour commander lesdits moyens de blocage de différentiel, ledit signal de commande (C) étant configuré pour prendre une première valeur pour bloquer lesdits différentiels (7) ou une seconde valeur pour débloquer lesdits différentiels (7) ;
dans lequel ledit signal de commande (C) est réglé sur sa première valeur si, dans un intervalle de temps prédéfini, les conditions suivantes sont remplies :
i) I) la vitesse du véhicule est inférieure à un seuil inférieur ;
ii) la pression dans le premier conduit est supérieure à un seuil spécifique ;
iii) le sens de déplacement est en déplacement avant ;
iv) la fonction hydraulique est activée ;
v) le signal de commande de la pompe est supérieur à un seuil spécifique ;
vi) la position de la flèche est inférieure à une position prédéfinie ;
vii) la position du godet se trouve dans une plage de positions prédéfinie ; et
viii) la vitesse du moteur est supérieure à un seuil prédéfini
dans lequel ledit signal de commande (C) est réglé sur sa seconde valeur si au moins l'une des caractéristiques suivantes est atteinte :
i) le sens de déplacement est neutre ou inversé ; ou
ii) la vitesse du véhicule est supérieure à un seuil spécifique.

8. Procédé selon la revendication 7, dans lequel :
• le seuil inférieur de la vitesse du véhicule est de 35 km/h ;
• le seuil supérieur de la vitesse du véhicule est de 10 km/h ;
• le seuil de pression est de 250 bars ;
• le seuil du signal de commande est de 600 mA ;
• le seuil de vitesse du moteur est de 1500 rpm.
